# EUROPÄISCHE PATENTSCHRIFT

(11) **EP 4 313 757 B1**
(45) Veröffentlichungstag und Bekanntmachung des Hinweises auf die Patenterteilung: **27.08.2025**
(21) Anmeldenummer: 22718639.2
(22) Anmeldetag: 25.03.2022
(51) Int. Cl.: B64C 1/06, B64D 11/00

(54) **FLUGZEUGKABINENABSCHNITT UND FLUGZEUG MIT EINEM FLÜSSIGKEITSSAMMLER**
AIRCRAFT CABIN SECTION AND AIRCRAFT WITH A LIQUID COLLECTOR
SECTION DE CABINE D'AÉRONEF ET AÉRONEF AVEC UN COLLECTEUR DE LIQUIDE

(30) Priorität: 29.03.2021 DE 102021107814
(43) Veröffentlichungstag der Anmeldung: 07.02.2024
(73) Patentinhaber: Airbus Operations GmbH, 21129 Hamburg (DE)
(72) Erfinder: WENG, Alexander, 21129 Hamburg (DE)
(74) Vertreter: Schornack, Oliver
(86) Internationale Anmeldenummer: PCT/EP2022/057993
(87) Internationale Veröffentlichungsnummer: WO 2022/207509

(56) Entgegenhaltungen:
- EP-A1- 3 476 713
- DE-A1- 102018 129 183
- US-A- 4 378 888
- US-A1- 2013 009 010

## Beschreibung

Die vorliegende Erfindung betrifft einen Flugzeugkabinenabschnitt, der einen Flüssigkeitssammler aus flexiblem Material umfasst, sowie ein Flugzeug mit solch einem Flugzeugkabinenabschnitt. Insbesondere betrifft die vorliegende Erfindung einen Flugzeugkabinenabschnitt und zugehöriges Flugzeug, wobei der aus flexiblem Material bestehende Flüssigkeitssammler Flüssigkeit von einer Oberseite eines Kabineneinrichtungsmoduls sammelt und abführt.

In Flugzeugen fällt häufig Kondenswasser im Bereich der Außenhaut an. Insbesondere bei längeren Flugphasen in großen Höhen, in denen außerhalb des Flugzeugs sehr tiefe Temperaturen (meist unterhalb von -50 °C) herrschen, kondensiert im Innenraum des Flugzeugs vermehrt Feuchtigkeit aus der Luft. Gerade die Atemluft der Passagiere enthält viel Feuchtigkeit. Um das so entstehende Kondenswasser abzuführen, bevor es in den Innenraum des Flugzeugs, insbesondere in die Passagierkabine, gelangt, wird eine spezielle wasserführende Isolierung entlang der Außenhaut des Flugzeugs angebracht. Diese Isolierung ist so gestaltet, dass sie an ihrer Außenseite Feuchtigkeit und Kondenswasser ableiten kann und neben der Außenhaut des Flugzeugs in den Bodenbereich des Flugzeugrumpfes (auch Bilge genannt) abführt.

Jedoch kann im Deckenbereich des Flugzeugs aufgrund der geringen Neigung der Außenhaut und Isolierung Kondenswasser entstehen oder austreten und in den Innenraum des Flugzeugs gelangen. Im Bereich der Passagierkabine sind meist Einrichtungsmodule und Verkleidungen vorgesehen, auf deren Außenseite oder Oberseite dieses Kondenswasser gesammelt und manchmal auch abgeführt wird. Beispielsweise können Filzstreifen an der Außenseite der Module und Verkleidungen angebracht sein, die Kondenswasser aufnehmen und in der nächsten Trocknungsphase, zum Beispiel am Boden wenn kein Kondenswasser anfällt, wieder an die Umgebung abgeben. Ein unteres Ende des Moduls oder der Verkleidung ist meist so angeordnet, dass das Kondenswasser zum nächsten Einrichtungsmodul oder Verkleidungselement fließt. In diesem Übergangsbereich zwischen zwei Modulen oder Verkleidungselementen werden auch Rinnen oder Rohre eingesetzt, um das Kondenswasser gezielt weiterzuleiten.

Die DE 10 2018 129 183 A1 betrifft ein Kabinenmodul, auf dessen Oberseite eine Dränagerinne vorgesehen ist, beispielsweise in Form einer Vertiefung in der Oberfläche der Oberseite des Kabinenmoduls. Die durch die Dränagerinne aufgefangene Flüssigkeit kann über einen optionalen Abflussschlauch in einen Abflusstrichter geleitet werden. Die EP 3 476 713 A1 und US 2013/009010 A1 betreffen Vorrichtungen zum Sammeln von Kondenswasser im Bereich einer Außenhaut eines Flugzeugs, wobei letztendlich ein Schlauch zum Weiterleiten des Kondenswassers eingesetzt wird.

Da in dem Zwischenraum zwischen Außenseite des Einrichtungsmoduls oder Verkleidungselements und Isolierung an der Außenhaut des Flugzeugs unterschiedlichste Flugzeugkomponenten untergebracht sind, wie zum Beispiel Kabel, Wasserrohre, Lüftungsleitungen, elektronische Bauteile, etc., müssen die Rinnen und Filzstreifen sowie andere kondenswasserführende Bauteile verschiedenste Formen aufweisen. Gerade in Längsrichtung des Flugzeugs betrachtet können sich die örtlichen Gegebenheiten ändern, auch wenn gleiche Einrichtungsmodule eingebaut werden. Daher muss eine Vielzahl von kondenswasserführenden Bauteilen zertifiziert, hergestellt und vorgehalten werden, die an den Einrichtungsmodulen und Verkleidungselementen eingebaut werden.

Der Erfindung liegt daher die Aufgabe zugrunde, die Kondenswasserableitung in einem Flugzeug zu vereinfachen.

Diese Aufgabe wird durch einen Flugzeugkabinenabschnitt mit den Merkmalen gemäß Anspruch 1, und durch ein Flugzeug mit den Merkmalen gemäß Anspruch 10 gelöst.

Gemäß einem ersten Aspekt zum besseren Verständnis der vorliegenden Offenbarung umfasst ein Flugzeugkabinenabschnitt ein Kabineneinrichtungsmodul, das eine Oberseite aufweist, ein flüssigkeitsführendes Element, das an der Oberseite des Kabineneinrichtungsmoduls angeordnet ist, und einen Flüssigkeitssammler, der an einem unteren Ende des flüssigkeitsführenden Elements angeordnet ist. Dabei kann das flüssigkeitsführende Element eine Flüssigkeit, wie zum Beispiel Kondenswasser, die auf die Oberseite des Kabineneinrichtungsmoduls gelangt, entlang der Oberseite des Kabineneinrichtungsmoduls ableiten.

Hier beschriebene Ausrichtungen und Seiten, wie zum Beispiel oben, unten, Oberseite, Innenseite, etc., sind immer auf den Flugzeugkabinenabschnitt im eingebauten Zustand in einem Flugzeug, welches am Boden steht, zu verstehen. So ist die Angabe "oben"/"Ober-" in eine Richtung im Wesentlichen entgegen der Gravitationskraft zu verstehen, und "unten"/"Unter-" meint im Wesentlichen mit der Gravitationskraft. Da der Flugzeugrumpf im Querschnitt rund ist, sind diese Begriffe nicht exakt nach der Gravitationskraft ausgerichtete zu verstehen. Vielmehr ist eine Oberseite eines Moduls auch dann eine "Oberseite", wenn ihre Richtung zumindest eine Komponente in Richtung entgegen der Gravitationskraft aufweist. Mit anderen Worten kann eine Oberseite eines Moduls in eine Seitenwand übergehen oder einen Abschnitt einer Seitenwand bilden. Gleiches gilt entsprechend für eine Unterseite eines Moduls. "Innen" betrifft auch eine Richtung oder Seite, die in das Zentrum des Flugzeugrumpfes zeigt, während "außen" eine Richtung oder Seite, die zur Außenhaut des Flugzeugrumpfes zeigt, angibt.

Der Flüssigkeitssammler besteht insbesondere aus flexiblem Material, das ein Lumen zum Ableiten einer Flüssigkeit bildet. Das Lumen (ein von dem flexiblen Material umschlossener Hohlraum) weist eine Eingangsöffnung auf, die an dem unteren Ende des flüssigkeitsführenden Elements angeordnet ist, sodass die Flüssigkeit von dem mindestens einen flüssigkeitsführenden Element in das Lumen fließt. Das Lumen kann ein Hohlraum sein, der durch eine Hülle begrenzt ist. Der Hohlraum ist beispielsweise rohrförmig ausgebildet. Jedoch sind auch andere Querschnittsformen möglich, die Flüssigkeiten aufnehmen und weiterführen können. Das Lumen kann als ein Behältnis ausgebildet sein, welches aus einer flexiblen Hülle besteht und von einem flüssigkeitsführenden Element über die Eingangsöffnung Flüssigkeit aufnimmt. Durch die Verwendung eines flexiblen Materials lässt sich der Flüssigkeitssammler und insbesondere dessen Lumen sehr flexibel verlegen. Als flexibles Material ist beispielsweise Folie, verstärkte Folie oder ein Gewebe, wie beschichtetes Gewebe einsetzbar.

Es kann auch in einer Ausführungsform vorgesehen sein, dass der Flüssigkeitssammler nicht ausschließlich aus flexiblem Material besteht, sondern auch einen geringen Anteil an starrem Materialien aufweist, beispielsweise um formgebend zu wirken.

Gerade in Bereichen des Flugzeugkabinenabschnitts, in denen weitere Komponenten auf oder in der Nähe der Oberseite des Kabineneinrichtungsmoduls vorgesehen sind, kann der aus einem flexiblen Material hergestellte Flüssigkeitssammler einfach und flexibel verlegt werden. Im Gegensatz zu bisherigen Rinnen, die aus festem Material gefertigt sind, passt sich der Flüssigkeitssammler aus flexiblem Material der Umgebung an. Es müssen nicht unterschiedliche Bauteile hergestellt und vorgehalten werden, sondern es reicht ein Flüssigkeitssammler, der an verschiedensten Stellen im Flugzeug installiert werden kann und sich dort den räumlichen Gegebenheiten anpasst.

Zudem ist der Flüssigkeitssammler aus flexiblem Material deutlich leichter. Im Vergleich zu bisherigen Rinnen aus festem Material kann ein Flüssigkeitssammler aus beispielsweise Folie nur 10 % der Masse einer festen Rinne oder weniger aufweisen. Beispielsweise kann die Folie, aus der der Flüssigkeitssammler hergestellt wird, eine Kunststofffolie, eine Metallfolie, eine faserverstärkte oder fasergitterverstärkte Folie, eine Folie mit Hitzeschutz oder eine Kombination daraus sein. Dabei können flexible Materialien mit einem Flächengewicht von 35 bis 165 g/m² Einsatz finden. Lediglich beispielhaft kann zur Herstellung des Flüssigkeitssammlers eine Folie verwendet werden, die üblicherweise zur Umhüllung einer Isolierung in dem Flugzeug, wie zum Beispiel der Primärisolierung, benutzt wird. Diese erfüllt bereits alle notwendigen Anforderungen an den oberflächlichen Transport von Flüssigkeit, zum Beispiel von Kondenswasser.

In einer Implementierungsvariante kann der Flüssigkeitssammler eine Ausgangsöffnung aufweisen, die so angeordnet ist, dass Flüssigkeit aus dem Lumen des Flüssigkeitssammlers abfließt. Mit anderen Worten kann der Flüssigkeitssammler so in dem Flugzeugkabinenabschnitt installiert sein, dass die Ausgangsöffnung unterhalb der Eingangsöffnung liegt, während das Lumen zwischen der Eingangs- und Ausgangsöffnung verläuft. Dadurch lässt sich Flüssigkeit, die an der Eingangsöffnung in das Lumen eintritt, allein durch die Gravitation durch das Lumen hindurch zur Ausgangsöffnung leiten. Die Größe der Eingangsöffnung und der Ausgangsöffnung kann gewählt werden abhängig vom Flüssigkeitsvolumen und auch von gestalterischen Anpassungen des Flüssigkeitssammlers an den Flugzeugkabinenabschnitt.

In einer weiteren Implementierungsvariante kann die Eingangsöffnung größer als die Ausgangsöffnung sein. Dies ermöglicht ein Einsammeln von Flüssigkeit von der Oberseite des Kabineneinrichtungsmoduls und/oder entlang eines größeren Bereichs des flüssigkeitsführenden Elements und Zusammenführen der Flüssigkeit zu der kleineren Ausgangsöffnung. Der Flüssigkeitssammler übernimmt somit auch die Funktion eines Trichters, wobei durch die große Eingangsöffnung vermieden wird, dass Flüssigkeit an dem Flüssigkeitssammler vorbeiläuft und gegebenenfalls in einen Passagierbereich des Flugzeugkabinenabschnitts läuft.

Ferner kann durch eine große Eingangsöffnung auf einen entsprechend langen Abschnitt des flüssigkeitsführenden Elements verzichtet werden. Beispielsweise kann das flüssigkeitsführende Element aus einem Schaum oder einem Filz hergestellt sein, der Flüssigkeit auf der Oberseite des Kabineneinrichtungsmoduls leitet und/oder aufnimmt. Mit einem Flüssigkeitssammler aus flexiblem Material und großer Eingangsöffnung kann insbesondere an dem unteren Ende des flüssigkeitsführenden Elements dieses durch den Flüssigkeitssammler aus flexiblem Material ersetzt werden. Dies spart nicht nur Gewicht aufgrund des leichteren flexiblen Materials gegenüber dem flüssigkeitsführenden Element, sondern vermeidet auch das Gewicht der Flüssigkeit, welches in dem flüssigkeitsführenden Element aufgenommen ist (insbesondere bei Filz).

In einer weiteren Implementierungsvariante kann der Flüssigkeitssammler einen Schlauch umfassen, der an der Ausgangsöffnung des Flüssigkeitssammlers angeschlossen ist. Der Schlauch kann an der Ausgangsöffnung fluiddicht angeschlossen sein. Zum Beispiel kann das Lumen des Flüssigkeitssammlers an seiner Ausgangsöffnung in ein Lumen des Schlauchs übergehen. Der Schlauch kann an Komponenten in der Nähe des Kabineneinrichtungsmoduls leicht vorbeigeführt werden.

Eine Ausgangsöffnung des Schlauchs kann tiefer angeordnet sein als die Ausgangsöffnung des Flüssigkeitssammlers. Beispielsweise kann der Schlauch verwendet werden, Flüssigkeit an Flugzeugkomponenten vorbeizuleiten und in einem Bereich abgeben, der bereits zur Aufnahme und/oder zum Weiterleiten von Kondenswasser eingerichtet ist. So ist die Außenseite der Flugzeugaußenhautisolierung (Primärisolierung des Flugzeugs) üblicherweise zum Drainieren von Kondenswasser ausgelegt, sodass der Schlauch bis dort gelegt werden kann. Selbstverständlich kann der Schlauch auch bis in eine Bilge des Flugzeugs geführt werden.

In einer anderen Implementierungsvariante kann der Flüssigkeitssammler ein Spreizelement aufweisen, das die Eingangsöffnung zumindest abschnittsweise bildet und die Hülle aus flexiblem Material des Flüssigkeitssammlers voneinander beabstandet hält. Beispielsweise kann das Spreizelement entlang einer Oberseite des Flüssigkeitssammlers verlaufen und die Oberseite der Eingangsöffnung bilden. Die Hülle aus flexiblem Material des Flüssigkeitssammlers bildet ebenfalls eine Oberseite des Flüssigkeitssammlers und eine Unterseite des Flüssigkeitssammlers, wobei zwischen der Oberseite und Unterseite das Lumen von dem flexiblen Material eingeschlossen ist. Mit anderen Worten sind flexible Materialabschnitte vorgesehen, die die Oberseite und Unterseite des Flüssigkeitssammlers bilden. Der Abschnitt des Flüssigkeitssammlers, der die Oberseite bildet, schließt dabei an das Spreizelement an. Beispielsweise ist die Hülle aus flexiblem Material an der Oberseite des Flüssigkeitssammlers mit dem Spreizelement (fluiddicht) verbunden, sodass das Spreizelement die Oberseite des Flüssigkeitssammlers von der Unterseite des Flüssigkeitssammlers beabstandet hält.

Ferner liegt im weiteren Verlauf des Lumens das die Oberseite des Flüssigkeitssammlers bildende flexible Material auf dem die Unterseite des Flüssigkeitssammlers bildende flexible Material auf. Mit anderen Worten ist eine flächig aneinanderliegende Hülle aus vorzugsweise Folie gebildet, die bei Durchströmen von Flüssigkeit den Flächenkontakt verliert. Da das Lumen an der Eingangsöffnung und Ausgangsöffnung des Flüssigkeitssammlers offen ist, wird Flüssigkeit durch das Lumen hindurchströmen und dabei das flexible Material zwischen Oberseite und Unterseite auseinander bewegen. Somit lässt sich Flüssigkeit in einfacher Form und sehr gewichtssparend leiten. Insbesondere kann auf starre und schwerere Leitungen und Rohre verzichtet werden.

Lediglich beispielhaft kann das Spreizelement aus einem formstabilen Schaum hergestellt sein. Die die Oberseite des Flüssigkeitssammlers bildende Hülle aus flexiblem Material kann an dem Schaum befestigt sein, beispielsweise verklebt sein, oder der Schaum ist in das flexible Material integriert.

Alternativ oder zusätzlich kann das Spreizelement aus einem Draht gebildet sein. Ein Draht kann ebenfalls das die Oberseite des Flüssigkeitssammlers bildende flexible Material von der Unterseite beabstandet halten und zudem so gebogen werden, dass sich die Eingangsöffnung an umliegende Bauteile anpasst (anschmiegt). Somit kann der Flüssigkeitssammler während des Einbaus in den Flugzeugkabinenabschnitt an die jeweilige Umgebung angepasst werden und trotzdem mit einer geöffneten (offengehaltenen) Eingangsöffnung ausgestaltet werden.

Ebenfalls alternativ kann das Spreizelement die Eingangsöffnung vorzugsweise vollständig umschließen oder aufweiten mit einem aus einem Kunststoff, vorzugsweise Spritzguss hergestellten Bauteil. Dieses Spritzgussteil kann in einer bevorzugten Ausführungsform auf Flugzeugkomponenten aufgeklebt werden. Das Spreizelement kann auch die Form eines Stutzens aufweisen, welches bei speziellen Bauformen von Flugzeugkomponenten direkt an das flüssigkeitsführende Element angeschlossen ist.

Ebenfalls alternativ oder zusätzlich kann das die Oberseite des Flüssigkeitssammlers bildende flexible Material an ihrer oberen Kante (entlang der Eingangsöffnung) auf sich selbst umgeschlagen sein und die obere Kante auf dem flexiblen Material befestigt sein, sodass eine kleine Menge Luft in einer schlauchförmigen Wulst entlang der oberen Kante eingeschlossen ist. Da in dem Flugzeugkabinenabschnitt Kondenswasser meist in großen Flughöhen anfällt, in denen auch der Druck in der Flugzeugkabine verringert ist, wird sich der Druck der Luft in der schlauchförmigen Wulst gegenüber ihrer Umgebung relativ erhöhen. Dadurch vergrößert sich das Volumen der kleinen Menge Luft in der Wulst, wodurch das Spreizelement gebildet wird, und die Oberseite des flexiblen Materials von der Unterseite beabstandet gehalten wird.

In noch einer weiteren Implementierungsvariante kann der Flugzeugkabinenabschnitt ferner ein Halteelement umfassen, das die Hülle aus flexiblem Material des Flüssigkeitssammlers an dem unteren Ende des flüssigkeitsführenden Elements hält. Das Halteelement kann insbesondere einen die Unterseite des Flüssigkeitssammlers bildenden Abschnitt der Hülle aus flexiblem Material mit dem unteren Ende des flüssigkeitsführenden Elements (fluiddicht) verbinden. Dadurch wird Flüssigkeit von/aus dem flüssigkeitsführenden Element durch die Eingangsöffnung in das Lumen des Flüssigkeitssammlers geführt.

Ferner kann das Halteelement alternativ oder zusätzlich im Bereich des flüssigkeitsführenden Elements an der Oberseite des Kabineneinrichtungsmoduls befestigt sein. Ebenfalls alternativ oder zusätzlich kann das flüssigkeitsführende Element zumindest abschnittsweise durch die Eingangsöffnung in das Lumen des Flüssigkeitssammlers hineinragen, um Flüssigkeit gezielt im Lumen abzugeben.

Lediglich beispielhaft kann das Halteelement ein Klebestreifen sein, der an dem flüssigkeitsführenden Element und/oder an der Oberseite des Kabineneinrichtungsmoduls befestigt ist. Die die Unterseite des Flüssigkeitssammlers bildende Hülle aus flexiblem Material kann entlang ihrer die Eingangsöffnung abschnittsweise bildenden Kante auf den Klebestreifen geklebt werden. Umgekehrt kann auch der Klebestreifen an der Hülle befestigt werden oder darin integriert sein und an dem flüssigkeitsführenden Element und/oder auf die Oberseite des Kabineneinrichtungsmoduls geklebt werden. Insbesondere kann auch ein Doppelklebeband eingesetzt werden.

In einer anderen Implementierungsvariante kann der Flugzeugkabinenabschnitt ferner ein flüssigkeitsführendes Bauteil umfassen, das neben und/oder unterhalb des flüssigkeitsführenden Elements angeordnet ist. Das flüssigkeitsführende Bauteil kann dazu eingerichtet sein, Flüssigkeit durch den Flugzeugkabinenabschnitt und/oder von dem Flugzeugkabinenabschnitt weg nach unten zu leiten.

Dabei kann der Flüssigkeitssammler so angeordnet sein, dass Flüssigkeit aus dem Lumen des Flüssigkeitssammlers in oder auf das flüssigkeitsführende Bauteil fließt. Mit anderen Worten verbindet das Lumen des Flüssigkeitssammlers das flüssigkeitsführende Element auf der Oberseite des Kabineneinrichtungsmoduls mit dem flüssigkeitsführenden Bauteil.

In einer Implementierungsvariante kann das flüssigkeitsführende Bauteil eine Seitenverkleidung des Flugzeugkabinenabschnitts, eine Rückwand des Kabineneinrichtungsmoduls und/oder eine Isolierung der Außenwand des Flugzeugkabinenabschnitts sein. Eine Seitenverkleidung ist zum Beispiel eine dünne Abdeckung eines Seitenbereichs des Flugzeugrumpfes, deren Innenseite in der Passagierkabine sichtbar ist. Eine Seitenverkleidung kann auch ein Lichtpaneel (auch Covelightpanel genannt) umfassen, das zum Beispiel zwischen einem Gepäckfach und einem Seitenpaneel oder Fensterpaneel angeordnet ist. Eine Rückwand des Kabineneinrichtungsmoduls ist eine Seitenwand des Kabineneinrichtungsmoduls, die nach außen weist. Eine Isolierung der Außenwand des Flugzeugkabinenabschnitts (genauer gesagt der Außenhaut des Flugzeugs) ist üblicherweise dazu ausgelegt, Flüssigkeit, wie zum Beispiel Kondenswasser, nach unten abzuleiten. Durch Anschließen der Ausgangsöffnung des Lumens des Flüssigkeitssammlers an die Isolierung kann die von dem Flüssigkeitssammler aufgefangene Flüssigkeit nach unten auf die Isolierung abgegeben und in üblicher Art und Weise von dieser weiter abgeführt werden. Beispielsweise kann die Isolierung auf einer Oberseite und/oder Außenseite eine wasserführend Beschichtung oder ähnliches aufweisen und somit Drainagepfade bilden.

In noch einer weiteren Implementierungsvariante kann das Kabineneinrichtungsmodul ein Gepäckfach, eine Seitenverkleidung, ein Deckenverkleidungselement und/oder ein Monument sein. Bei dem Gepäckfach kann es sich um ein Überkopfgepäckfach handeln, welches beispielsweise oberhalb von Passagiersitzen installiert ist. Das Deckenverkleidungselement kann beispielsweise oberhalb von Passagiersitzen und/oder oberhalb eines Passagiergangs angeordnet sein und die sichtbare Decke der Passagierkabine bilden. Ein Monument ist üblicherweise ein geschlossenes Modul, wie zum Beispiel eine Bordküche, eine Bordtoilette, ein Schrank oder ähnliches. Jedes dieser Kabineneinrichtungsmodule weist üblicherweise einen Abschnitt auf, der zumindest teilweise nach oben ausgerichtet ist, d. h. eine Oberseite aufweist. Mit anderen Worten trifft von einem Deckenbereich tropfende Flüssigkeit auf den Abschnitt des Kabineneinrichtungsmoduls und fließt auf dessen Oberseite aufgrund der Gravitation weiter ab.

Diese auf der Oberseite des Kabineneinrichtungsmoduls fließende Flüssigkeit kann durch das flüssigkeitsführende Element (oder eine Vielzahl davon) geleitet werden insbesondere kann die Flüssigkeit zu der Eingangsöffnung des Flüssigkeitssammlers geführt werden.

Alternativ oder zusätzlich hierzu kann der Flüssigkeitssammler auch Flüssigkeit auf seiner Oberseite (oben liegenden Außenseite) ableiten. Durch die Herstellung des Flüssigkeitssammlers aus flexiblem Material leitet diese Flüssigkeit nicht nur in dem Lumen, sondern in gleicher Weise auf der Oberseite ab. Insbesondere im Fall eines relativ zu dem Kabineneinrichtungsmodul breiten Flüssigkeitssammler bedeckt der Flüssigkeitssammler die Oberseite des Kabineneinrichtungsmoduls und schützt dieses auch vor Flüssigkeit, die im Bereich des Flüssigkeitssammlers nach unten tropft und ohne den Flüssigkeitssammler auf das Kabineneinrichtungsmodul oder andere Flugzeugkomponenten tropfen würde.

In einer anderen Implementierungsvariante kann der Flüssigkeitssammler aus einer Folie, die aufeinandergelegt und entlang einer Längsseite des Flüssigkeitssammlers verschweißt ist, oder aus zwei Folien, die aufeinandergelegt und entlang zweier gegenüberliegender Längsseiten des Flüssigkeitssammlers verschweißt sind, bestehen. Dadurch lässt sich aus einem oder zwei Folienstücken ein beliebig großer Flüssigkeitssammler herstellen. Durch das Verschweißen an einer oder zwei Längsseiten lässt sich der Flüssigkeitssammler einfach, flexibel und kostengünstig herstellen. Auch lässt sich die Form des Lumens in Längs- und Querrichtung einfach und kostengünstig sehr flexibel gestalten.

Alternativ kann der Flüssigkeitssammler auch aus einer schlauchförmigen Hülle aus flexiblem Material hergestellt werden. Beispielsweise kann eine Folie durch Extrusion mit geschlossenem Querschnitt (das Lumen umschließend) hergestellt werden.

Selbstverständlich kann in einer weiteren Alternative auch eine oder mehrere Schweißnähte eingebracht werden, um die Form des Lumens nachträglich zu bestimmen.

Gemäß einem weiteren Aspekt zum besseren Verständnis der vorliegenden Offenbarung umfasst ein Flugzeug mindestens einen Flugzeugkabinenabschnitt gemäß dem ersten Aspekt oder einer der zugehörigen Implementierungsvarianten.

Ferner können die oben beschriebenen Aspekte und Implementierungsvarianten selbstverständlich kombiniert werden, ohne dass dies explizit beschrieben ist. Jede der beschriebenen Implementierungsvarianten ist somit optional zu jedem der Aspekte und deren Implementierungsvarianten oder bereits Kombinationen davon zu sehen. Die vorliegende Offenbarung ist somit nicht auf die einzelnen Ausgestaltungen und Implementierungsvarianten in der beschriebenen Reihenfolge oder einer bestimmten Kombination der Aspekte und Implementierungsvarianten beschränkt.

Bevorzugte Ausführungsbeispiele der Erfindung werden nun anhand der beigefügten schematischen Zeichnungen näher erläutert, wobei:
- Figur 1: schematisch eine Ansicht eines Flugzeugkabinenabschnitts zeigt;
- Figur 2: schematisch eine Seitenansicht eines Flugzeugkabinenabschnitts zeigt;
- Figuren 3 bis 5: schematisch Ansichten von Flugzeugkabinenabschnitten zeigen;
- Figur 6: schematisch Schnittansichten eines Flugzeugs und Flugzeugkabinenabschnitts sowie einen Flüssigkeitssammler mit zugehörigen Flüssigkeitsströmen zeigt;
- Figur 7: schematisch einen Flüssigkeitssammler im Detail zeigt; und
- Figuren 8 bis 11: schematisch verschiedene Ausgestaltungen eines Flüssigkeitssammlers zeigen.

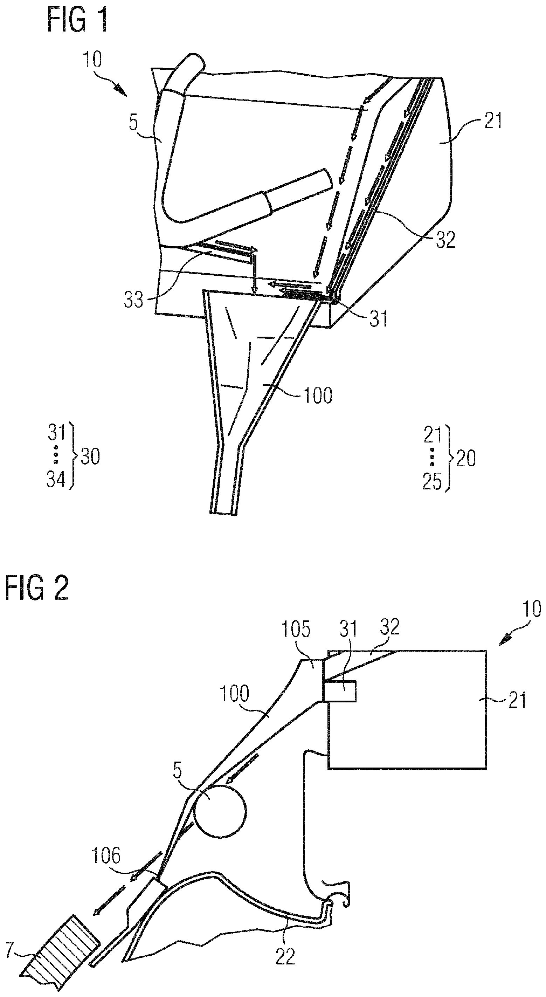

Figur 1 zeigt schematisch eine Ansicht eines Flugzeugkabinenabschnitts 10, der ein Kabineneinrichtungsmodul 20 in Form eines Überkopfgepäckfachs 21 umfasst. Das Überkopfgepäckfach 21 ist hier rückseitig dargestellt, sodass seine Oberseite sichtbar ist. Auf und an dem Kabineneinrichtungsmodul 20 ist mindestens ein flüssigkeitsführendes Element 30 angebracht. Dieses flüssigkeitsführende Element 30 kann beispielsweise in Form eines Streifens aus Schaum oder Filz implementiert sein oder in Form einer Vertiefung oder Rinne, die in oder an dem Kabineneinrichtungsmodul 20 integriert bzw. angebracht ist, implementiert sein.

Figur 1 zeigt ein flüssigkeitsführendes Element 32, das an einer Seitenwand des Überkopfgepäckfachs 21 installiert ist, wobei die Seitenwand zum Beispiel an eine Seitenwand eines weiteren Überkopfgepäckfachs (nicht dargestellt) angrenzen kann. Ein weiteres flüssigkeitsführendes Element 33 ist auf der Oberseite des Überkopfgepäckfachs 21 vorgesehen, während ein drittes flüssigkeitsführendes Element 31 an einer Rückseite des Überkopfgepäckfachs 21 installiert ist. Durch die flüssigkeitsführenden Elemente 30 wird eine Flüssigkeit, zum Beispiel Kondenswasser, die auf dem Überkopfgepäckfach 21 anfällt, daran gehindert auf eine Seite unterhalb des Überkopfgepäckfachs 21 zu fließen. Somit wird die Flugzeugkabine, insbesondere ein Passagierbereich, vor herabtropfendem oder herabfließendem Kondenswasser geschützt.

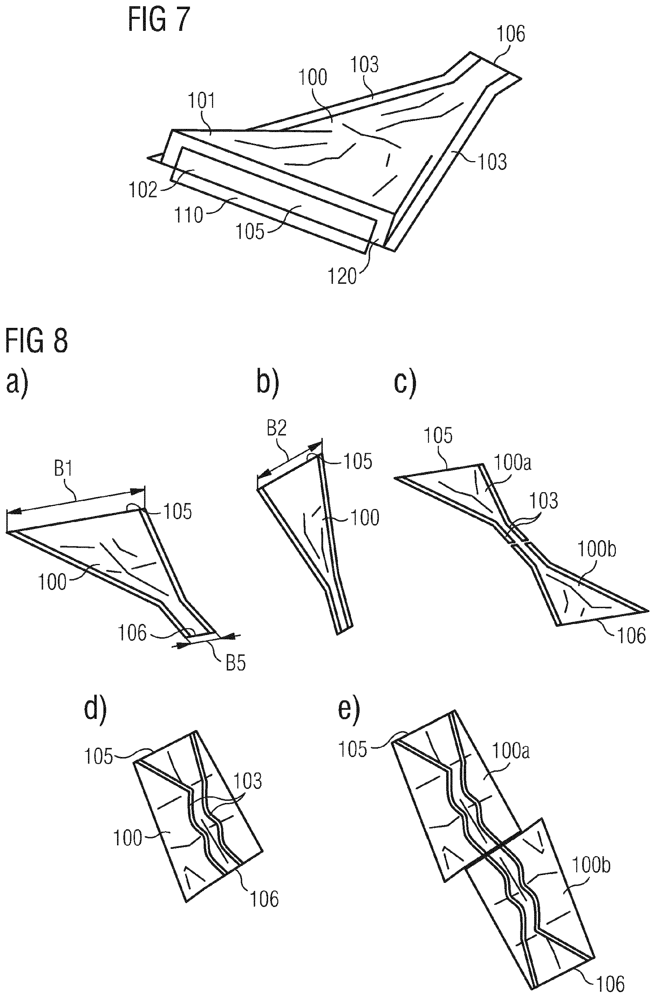

Der Flugzeugkabinenabschnitt 10 umfasst ferner einen Flüssigkeitssammler 100, der an einem unteren Ende eines der flüssigkeitsführenden Elemente, hier der flüssigkeitsführenden Elemente 31 und 33, angeordnet ist. Der Flüssigkeitssammler 100, der in Bezug auf Figur 7 noch näher beschrieben wird, ist aus einemflexiblen Material hergestellt und weist ein Lumen auf. Das Lumen kann ein Hohlraum sein, der durch eine Hülle begrenzt ist. Durch das Lumen kann Flüssigkeit von den flüssigkeitsführenden Elementen 30 eingesammelt und nach unten abgeführt werden.

Wie aus Figur 1 erkennbar ist, sind in einem Bereich oberhalb der Oberseite des Kabineneinrichtungsmoduls 20 Flugzeugkomponenten 5 installiert. Beispielsweise kann ein Lüftungsrohr 5 dort installiert sein. Solche Flugzeugkomponenten 5 befinden sich meist auch in einem rückseitigen Bereich des Kabineneinrichtungsmoduls 20, sodass alle flüssigkeitsführenden Bauelemente um diese Flugzeugkomponenten 5 herum verlegt werden müssen. Der Flüssigkeitssammler 100 aus flexiblem Material lässt sich in sehr einfacher und kostengünstiger Weise installieren und verlegen, ohne speziell an die Lage der Flugzeugkomponenten 5 angepasst werden zu müssen. Das flexible Material kann aus Folienmaterial bestehen.

Figur 2 zeigt eine Schnittansicht eines Flugzeugkabinenabschnitts 10, beispielsweise dem Flugzeugkabinenabschnitt 10 aus Figur 1. Darin ist die Lage und der Verlauf des Flüssigkeitssammlers 100 gut zu erkennen. In einem oberen Bereich, in dem sich eine Eingangsöffnung 105 des Lumens des Flüssigkeitssammlers 100 befindet, ist der Flüssigkeitssammler 100 an dem unteren Ende des flüssigkeitsführenden Elements 31 angeordnet, sodass Flüssigkeit von dem flüssigkeitsführenden Element 31 durch die Eingangsöffnung 105 in das Lumen fließt.

Der Flüssigkeitssammler 100 ist so verlegt, dass ein unteres Ende davon, insbesondere eine unten liegende Ausgangsöffnung 106 des Flüssigkeitssammlers 100, im Bereich einer Seitenverkleidung 22 (hier als Covelightpanel dargestellt) angeordnet ist. Die Flüssigkeit, die durch das Lumen des Flüssigkeitssammlers 100 fließt, wird somit durch die Ausgangsöffnung 106 auf das flüssigkeitsführende Bauteil 22 (hier die Seitenverkleidung 22) geleitet. Alternativ oder zusätzlich kann die Flüssigkeit, die das Lumen des Flüssigkeitssammlers 100 an der Ausgangsöffnung 106 verlässt, auf eine Isolierung 7 der Außenwand des Flugzeugkabinenabschnitts 10 geleitet werden. Der Flüssigkeitsstrom ist durch Pfeile in Figur 2 schematisch neben dem Flüssigkeitssammler 100 und dem eigentlichen flüssigkeitsführenden Lumen desselben dargestellt.

Wie ebenfalls in Figur 2 gezeigt ist, lässt sich der Flüssigkeitssammler 100 aus flexiblem Material in einfacher Weise verlegen, auch wenn sich Flugzeugkomponenten 5 in einem Zwischenraum zwischen Kabineneinrichtungsmodul 20 und Außenhaut des Flugzeugs 1 befinden. Anstatt eines komplex geformten, steifen Bauteils kann der Flüssigkeitssammler 100 aus flexiblem Material einfach über die Flugzeugkomponente 5 gelegt werden.

Um zu verhindern, dass der Flüssigkeitssammler 100 im Betrieb des Flugzeugs seine Lage so verändert, dass die Flüssigkeit nicht mehr gesammelt wird und/oder nicht mehr an das in Strömungsrichtung nächste flüssigkeitsführende Bauteil 7, 22 weitergegeben werden kann, kann der Flüssigkeitssammler 100 im Bereich seiner Eingangsöffnung 105 und Ausgangsöffnung 106 an den entsprechenden Modulen und Bauteilen befestigt werden. Zum Beispiel kann eine Unterseite des Flüssigkeitssammlers 100 im Bereich der Eingangsöffnung 105 an dem Kabineneinrichtungsmodul 20 und/oder an dem flüssigkeitsführenden Element 30 befestigt werden. Ebenso kann eine Unterseite des Flüssigkeitssammlers 100 im Bereich der Ausgangsöffnung 106 an dem flüssigkeitsführenden Bauteil, zum Beispiel in Form der Seitenverkleidung 22 und/oder der Isolierung 7 oder eines beliebigen dazwischen angeordneten flüssigkeitsführenden Bauteils, befestigt werden.

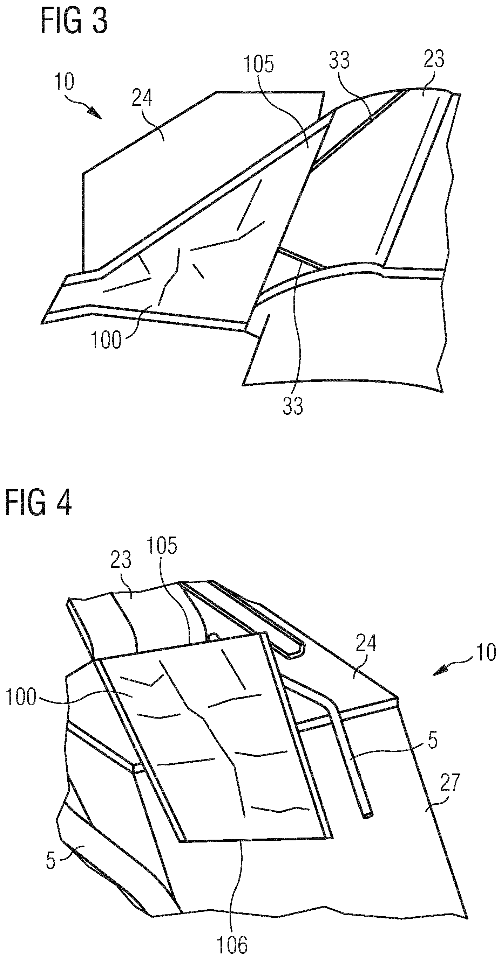

Die Figuren 3 bis 5 zeigen jeweils eine schematische Ansicht eines Flugzeugkabinenabschnitts 10. In dem Flugzeugkabinenabschnitt 10 gemäß Figur 3 ist ein Deckenverkleidungselement 23 neben und oberhalb eines Monuments 24 angeordnet. Auf dem Deckenverkleidungselement 23 können ebenfalls flüssigkeitsführende Elemente 33 angeordnet sein, die eine Flüssigkeit auf der Oberseite des Deckenverkleidungselements 23 in Richtung des Monuments 24 leiten. Daran anschließend ist ein Flüssigkeitssammler 100 aus flexiblem Material angeordnet, der die Flüssigkeit von der Oberseite des Deckenverkleidungselements 23 aufnimmt.

Wie aus der Figur 3 erkennbar ist, kann die Eingangsöffnung 105 des Flüssigkeitssammlers 100 so gestaltet sein, dass sie sich über die gesamte Breite des Deckenverkleidungselements 23 erstreckt. Somit kann auf die flüssigkeitsführenden Elemente 33 auch verzichtet werden, da sämtliche Flüssigkeit, die auf das Deckenverkleidungselement 23 gelangt in das Lumen des Flüssigkeitssammlers 100 über dessen Eingangsöffnung 105 aufgenommen wird.

Eine entsprechende Konstellation aus Deckenverkleidungselement 23 und Monument 24 ist auch in Figur 4 dargestellt. Hierbei ist der Flüssigkeitssammler 100 aus flexiblem Material jedoch auch an seiner Ausgangsöffnung 106 relativ breit gestaltet. Zum Beispiel kann die Ausgangsöffnung 106 ebenso breit sein, wie die Eingangsöffnung 105. Alternativ kann die Ausgangsöffnung 106 nahezu so breit sein, wie die Eingangsöffnung 105, und insbesondere an die Breite eines flüssigkeitsführenden Abschnitts einer Rückwand 27 des Monuments 24 angepasst sein.

Ferner kann der Flüssigkeitssammler 100 zwischen der Eingangsöffnung 105 und der Ausgangsöffnung 106 so lang ausgebildet sein, dass der Flüssigkeitssammler 100 die Oberseite des Monuments 24 bedeckt. Mit anderen Worten liegt die Ausgangsöffnung 106 des Flüssigkeitssammlers 100 in einem Bereich der Rückwand 27 des Monuments 24.

Somit müssen keine weiteren flüssigkeitsführenden Elemente auf der Oberseite des Monuments 24 und gegebenenfalls auch in einem Bereich der Rückwand 27 des Monuments 24 vorgesehen werden. Auch kann Flüssigkeit, die auf eine Oberseite (obere Außenseite) des Flüssigkeitssammlers 100 gelangt, auf der Oberseite des Flüssigkeitssammlers 100 abgeführt werden und zu der Rückwand 27 des Monuments 24 geleitet werden. Somit bildet der gesamte Flüssigkeitssammler 100 auf seiner äußeren Oberseite und in seinem Lumen ein flüssigkeitsführendes Bauteil, welches das Monument 24 schützt. Gegebenenfalls vorhandene Flugzeugkomponenten 5 können dabei ebenso von dem Flüssigkeitssammler 100 bedeckt und geschützt werden.

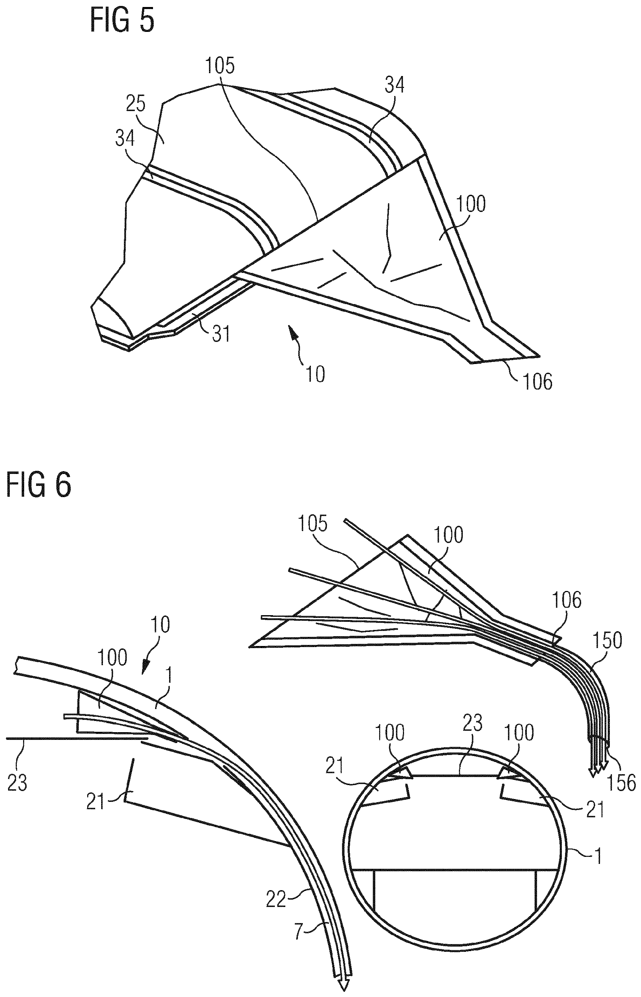

Figur 5 schließlich zeigt ein weiteres Kabineneinrichtungsmodul 20 in Form eines Deckenelements 23. In dem Deckenelement 23 sind flüssigkeitsführende Elemente 34 in Form von Rinnen oder Vertiefungen vorgesehen. Diese können beispielsweise in das Deckenelement 23 integriert sein, sodass keine zusätzlichen Elemente notwendig sind. An einer Seitenkante des Deckenelements 23 kann ein flüssigkeitsführendes Element 31 in Form einer Rinne oder aus Filz installiert sein. Die Eingangsöffnung 105 des Flüssigkeitssammlers 100 kann dabei so dimensioniert sein, dass sie mindestens eine Rinne oder Vertiefung 34, gezeigt sind vorzugsweise zwei Rinnen 34, des Deckenelements 23 überspannt und Flüssigkeit aus der Rinne oder Vertiefung 34 in das Lumen des Flüssigkeitssammlers 100 führt.

Figur 6 zeigt schematisch eine Schnittansicht eines Flugzeugs 1 und eines Flugzeugkabinenabschnitts 10 sowie einen Flüssigkeitssammler 100. So sind in dem Flugzeug 1 beispielsweise ein Deckenelement 23 und zwei sich gegenüberliegende Gepäckfächer 21 angeordnet. An jeder Übergangsstelle zwischen dem Deckenelement 23 und dem jeweiligen Gepäckfach 21 ist ein Flüssigkeitssammler 100 vorgesehen, der Flüssigkeit von dem Deckenelement 23 zu dem jeweiligen Gepäckfach 21 leitet.

An einer Übergangsstelle zwischen Gepäckfach 21 und Seitenverkleidung 22 oder Isolierung 7 kann ebenfalls ein Flüssigkeitssammler 100 vorgesehen sein (nicht dargestellt). Alternativ kann Flüssigkeit von dem Gepäckfach 21 direkt auf eine Außenseite der Seitenverkleidung 22 und/oder auf die Isolierung 7 geleitet werden, beispielsweise durch entsprechende Ausgestaltung der Oberseite des Gepäckfach 21.

Da das meiste Kondenswasser im Bereich des Deckenelements 23 anfällt, kann der dort installierte Flüssigkeitssammler 100 an seiner Ausgangsöffnung 106 in einen Schlauch 150 übergehen. Beispielsweise kann der Schlauch 150 an der Ausgangsöffnung 106 (fluiddicht) angeschlossen sein. Der Schlauch 150 kann an dem Gepäckfach 21 vorbeigeführt werden. Eine Ausgangsöffnung 156 des Schlauchs 150 kann an einer Außenseite der Seitenverkleidung 22 und/oder auf der Isolierung 7 liegen, sodass die Flüssigkeit von dem Deckenelement 23 direkt dorthin geleitet werden kann. Der Schlauch 150 kann aus einem anderen Material und mit einer anderen Dicke hergestellt sein als der Flüssigkeitssammler 100 aus flexiblen Material.

In Figur 7 ist der Flüssigkeitssammler 100 aus flexiblen Material detaillierter dargestellt. Insbesondere die Eingangsöffnung 105 ist erkennbar. Beispielsweise kann eine untere Folie oder ein unteres Hüllenteil des Flüssigkeitssammlers 100 entlang ihrer Kante an der Eingangsöffnung 105 mit einem Halteelement 110 ausgestattet sein. Bei dem Halteelement 110 kann es sich beispielsweise um einen Klebestreifen handeln, mit dem die untere Folie oder das untere Hüllenteil des Flüssigkeitssammlers 100 an dem unteren Ende des flüssigkeitsführenden Elements 30 und/oder an einer Oberseite des Kabineneinrichtungsmoduls 20 befestigt werden kann.

Um die Eingangsöffnung 105 in einem geöffneten Zustand zu halten und somit zu ermöglichen, dass Flüssigkeit in das Lumen des Flüssigkeitssammlers 100 jederzeit eintreten kann, ist ein Spreizelement 120 vorgesehen. Das Spreizelement 120 spreizt die Eingangsöffnung 105 auf, sodass eine obere Folie oder ein oberes Hüllenteil des Flüssigkeitssammlers 100 im Bereich der Eingangsöffnung 105 nicht direkt auf der unteren Folie/des unteren Hüllenteils des Flüssigkeitssammlers 100 aufliegt und die Eingangsöffnung 105 verschließen würde. Das Spreizelement 120 kann zum Beispiel aus einem formstabilen Schaum hergestellt sein, der mit der oberen Folie/ des oberen Hüllenteils des Flüssigkeitssammlers 100 verbunden ist oder darin integriert ist. Alternativ oder zusätzlich kann auch ein Draht das Spreizelement 120 bilden. Das Spreizelement kann auch ein Kunststoffteil, vorzugsweise ein Spritzgußteil sein. Es kann auch umlaufend ausgebildet sein und somit auch die Funktion des Halteelementes 110 erfüllen, indem das Kunstoffteil mit der unteren Seite aufgeklebt wird. In jedem Fall wird die obere Folie des Flüssigkeitssammlers 100 im Bereich der Eingangsöffnung 105 von der unteren Folie des Flüssigkeitssammlers 100 beabstandet gehalten.

Der in Figur 7 dargestellte Flüssigkeitssammler 100 ist in Längsrichtung (entlang des Lumens) an beiden gegenüberliegende Längsseiten 103 verschweißt. Mit anderen Worten ist der Flüssigkeitssammler 100 aus zwei aufeinander liegenden Folien oder Hüllenteilen hergestellt, die an den beiden gegenüberliegenden Längsseiten 103 verschweißt sind. Selbstverständlich kann der Flüssigkeitssammler 100 aus einem Stück hergestellt werden, das gefaltet und aufeinandergelegt wird und an seiner offenen Seiten entlang der Längsseite 103 verschweißt wird. Ebenso ist es denkbar, dass der Flüssigkeitssammler 100 aus einer rohrförmigen Folie oder Hülle ohne Schweißnähte in Längsrichtung hergestellt wird.

Figur 8 zeigt verschiedene Ausgestaltungen eines Flüssigkeitssammlers 100. So ist in Abbildung (a) ein Flüssigkeitssammler 100 dargestellt, der eine Eingangsöffnung 105 mit einer Breite B1 und eine Ausgangsöffnung 106 mit einer Breite B5 aufweist. Hier ist die Breite B1 größer als die Breite B5, sodass der Flüssigkeitssammler 100 eine Trichterfunktion übernehmen kann. In Abbildung (b) ist ein ähnlich gestalteter Flüssigkeitssammler 100 dargestellt, der jedoch an der Eingangsöffnung 105 eine Breite B2 aufweist. Die Breite B2 ist kleiner als die Breite B1 aus Abbildung (a). Dies soll verdeutlichen, dass der Flüssigkeitssammler 100 in einfacher Weise an die Gegebenheiten in dem Flugzeugkabinenabschnitt 10 angepasst werden kann. Beispielsweise kann durch Platzieren der Schweißnähte, die die Längsseiten 103 des Flüssigkeitssammlers 100 bilden, die Form des Flüssigkeitssammlers 100 und insbesondere dessen Lumen sehr einfach, flexibel und kostengünstig angepasst werden.

In Abbildung (c) ist ein Flüssigkeitssammler 100 dargestellt, dessen Eingangsöffnung 105 und Ausgangsöffnung 106 in etwa gleich dimensioniert sind. Hierbei können die Schweißnähte entlang der Längsseiten 103 entsprechend verlaufen. Alternativ kann der Flüssigkeitssammler 100 auch aus zwei identischen Flüssigkeitssammlern 100a und 100b hergestellt werden, die an ihren schmalen Enden miteinander verbunden sind (beispielsweise miteinander verschweißt sind), wobei deren Lumen miteinander verbunden sind (ineinander übergehen).

In den Abbildungen (d) und (e) sind Flüssigkeitssammler 100 dargestellt, deren Lumen einen nicht-geradlinigen Verlauf aufweist. In Abbildung (d) geht beispielsweise ein sich verengendes Lumen in ein schlauchförmiges Lumen über. Mit anderen Worten umfasst der Flüssigkeitssammler 100 einen Abschnitt, der als Schlauch fungiert. Gemäß der Variante aus Abbildung (e) sind wieder zwei gleiche Flüssigkeitssammler 100a und 100b miteinander verbunden.

Der nicht-geradlinige Verlauf des Lumens kann in beiden Fällen eingesetzt werden, um den Flüssigkeitssammler 100 um Flugzeugkomponenten 5 herumzulegen. Es ist natürlich ebenso möglich, einen Flüssigkeitssammler 100 mit geradlinigem Verlauf des Lumens so zu verlegen, dass der Flüssigkeitssammler 100 um Flugzeugkomponenten 5 herumläuft. Beispielsweise kann der Flüssigkeitssammler 100 mit einem so langen Lumen hergestellt werden, dass er einen nicht-geradlinigen Verlauf um alle Flugzeugkomponenten 5 herum einnehmen kann.

Selbstverständlich wird in den hier offenbarten Ausgestaltungen des Flüssigkeitssammlers 100, der aus zwei Flüssigkeitssammler 100 hergestellt ist oder zwei Flüssigkeitssammler 100 umfasst, durch den stromabwärts gelegenen Flüssigkeitssammler 100 (100b) keine Flüssigkeit gesammelt, sondern abgegeben.

Ebenfalls dargestellt ist in den Abbildungen (d) und (e), dass der Flüssigkeitssammler 100 aus flexiblen Materialabschnitten hergestellt werden kann, die entlang von Schweißnähten 103 ein Lumen bilden, während die übrigen (außerhalb der Schweißnähte 103 liegenden) Abschnitte der flexiblen Materialien, beispielsweise eine Folie, nicht abgeschnitten sind. Dadurch kann der Flüssigkeitssammler 100 einen größeren Abschnitt eines Kabineneinrichtungsmoduls 20 bedecken, wodurch dieses geschützt ist, beispielsweise vor herabtropfenden Flüssigkeiten. Dieser zusätzliche Schutz wird durch ein Minimum an zusätzlichem Gewicht erzielt.

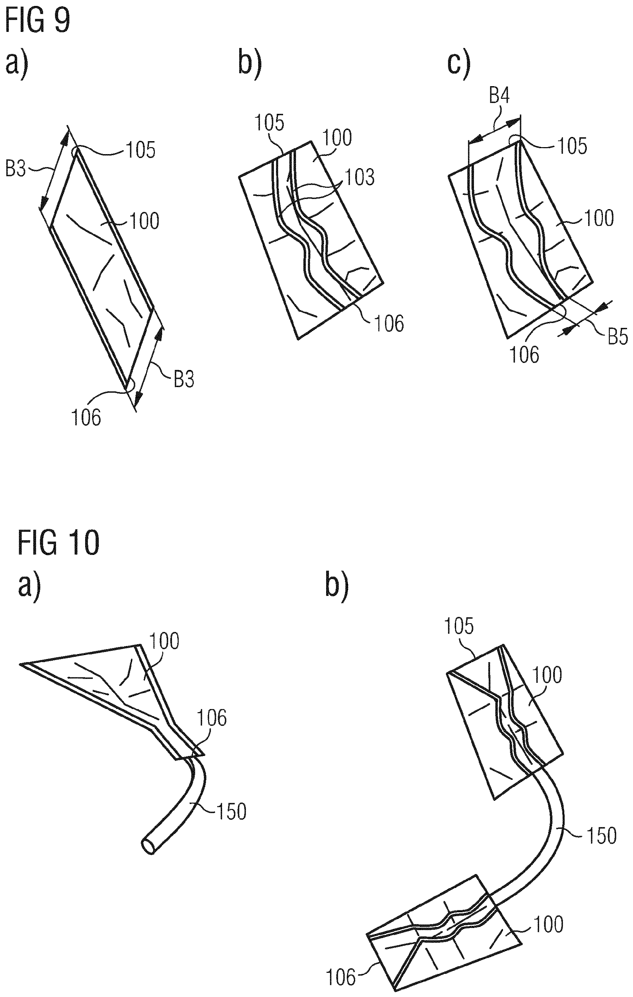

In Figur 9 sind weitere Flüssigkeitssammler 100 dargestellt. So ist aus Abbildung (a) erkennbar, dass auch trapezförmige oder rautenförmige Flüssigkeitssammler 100 bzw. Lumen hergestellt werden können. Beispielsweise können diese Flüssigkeitssammler 100 eine Eingangsöffnung 105 und eine Ausgangsöffnung 106 jeweils mit derselben Breite B3 aufweisen. Neben einem durchgängig nicht-geradlinigen Verlauf der Schweißnähte 103 mit (nahezu) gleich breiter Eingangsöffnung 105 und Ausgangsöffnung 106 (siehe Abbildung (b)) können die nicht-geradlinigen Schweißnähte 103 von einer Eingangsöffnung 105 mit der Breite B4 zu einer Ausgangsöffnung 106 mit Breite B5 verlaufen, wobei B4 größer als B5 ist (siehe Abbildung (c)).

Im Vergleich mit Figur 8 Abbildung (d), in der Schweißnähte 103 gezeigt sind, die zunächst geradlinig von der Eingangsöffnung zusammenlaufend angeordnet sind und in nicht-geradlinige Schweißnähte 103 übergehen, können die Schweißnähte 103 auch durchgängig nicht-geradlinig verlaufen und das dabei eingeschlossene Lumen dennoch verjüngen, wie es in Figur 9 Abbildung (c) dargestellt ist. In beiden Fällen lässt sich eine Trichterfunktion in den Flüssigkeitssammler 100 integrieren, wobei die Kontur des Lumens an die Gegebenheiten in dem Flugzeugkabinenabschnitt 10, insbesondere an dort angeordnete Flugzeugkomponenten 5, angepasst werden kann. Somit können die Funktionen eines trichterförmigen und eines schlauchförmigen Abschnitts kombiniert werden.

Figur 10 zeigt ferner Ausgestaltungen eines Flüssigkeitssammlers 100 mit daran angeschlossenem Schlauch 150. Beispielsweise kann der Schlauch 150 an einem Ausgang 106 des Lumens des Flüssigkeitssammlers 100 aus flexiblem Material angebracht sein, wobei das Lumen des Schlauchs 150 mit dem Lumen des Flüssigkeitssammlers 100 verbunden ist und nach außen hin fluiddicht abgeschlossen ist.

Im Vergleich zu den Ausgestaltungen eines Flüssigkeitssammlers 100 gemäß Figur 8, Abbildungen (c) und (e) kann ein Schlauch 150 zwischen zwei Flüssigkeitssammlern 100 angeordnet werden (siehe Figur 10, Abbildung (b)). Dadurch lässt sich mit einem ersten Flüssigkeitssammler 100 Flüssigkeit einfangen und mit einem zweiten Flüssigkeitssammler 100 über einen größeren (breiteren) Bereich als der Schlauch 150 wieder abgeben. Dies ermöglicht beispielsweise das Leiten von Flüssigkeit durch einen Bereich des Flugzeugkabinenabschnitts, der sehr schmal ist, mithilfe des Schlauchs, während im Bereich der Eingangsöffnung 105 des ersten Flüssigkeitssammlers 100 und im Bereich der Ausgangsöffnung 106 des zweiten Flüssigkeitssammlers 100 die Flüssigkeit über einen breiteren Bereich eingesammelt und abgegeben werden kann. Die beiden Flüssigkeitssammler 100 können zum Beispiel in Bereichen des Flugzeugkabinenabschnitts 10 angeordnet werden, in denen ein möglichst flexibler Verlauf notwendig ist.

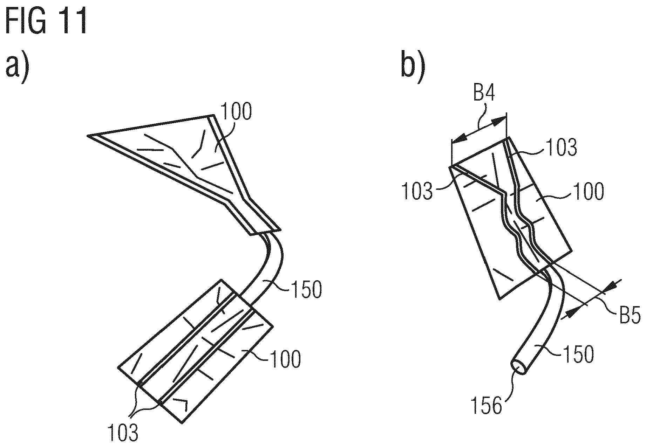

Figur 11 zeigt schließlich weitere Varianten eines Flüssigkeitssammlers 100 mit einem Schlauch 150. So ist in der Abbildung (a) eine Anordnung wie in Figur 10, Abbildung (a) gezeigt, an die stromabwärts am Ende des Schlauchs 150 ein weiterer Flüssigkeitssammler 100 angeschlossen ist. Dieser stromabwärts gesehen untere Flüssigkeitssammler 100 ist mit geradlinigen und im wesentlichen parallelen Schweißnähten 103 ausgestattet, sodass ein Lumen gebildet wird, dass beispielsweise dem Lumen des Schlauchs 150 entspricht. Jedoch lässt sich der Flüssigkeitssammler 100 stromabwärts des Schlauchs 150 flexibler verlegen.

In Figur 11 Abbildung (b) ist eine Kombination des Flüssigkeitssammlers 100 aus Figur 9, Abbildung (c) mit einem Schlauch 150 dargestellt. Sämtliche vorgeschlagenen Ausgestaltungen eines Flüssigkeitssammlers 100 mit Schlauch 150 können beispielsweise so eingesetzt werden, dass der Schlauch 150 an Flugzeugkomponenten 5 oder einem Kabineneinrichtungsmodul 20 vorbeigeführt wird und der Schlauch 150 in einem Bereich des Flugzeugkabinenabschnitts 10 endet (seine Ausgangsöffnung 156 in einem Bereich angeordnet ist), in dem Flüssigkeit üblicherweise aufgenommen und/oder abgeführt werden kann. Der Schlauch 150 kann eine höhere Festigkeit aufweisen als die Hülle aus flexiblem Material des Flüssigkeitssammlers 100, insbesondere gegen Quetschen (Verschließen des Lumens).

Selbstverständlich wird in den hier offenbarten Ausgestaltungen des Flüssigkeitssammlers 100, der aus zwei Flüssigkeitssammlern 100 hergestellt ist oder zwei Flüssigkeitssammler 100 umfasst, durch den stromabwärts gelegenen Flüssigkeitssammler 100 (100b) keine Flüssigkeit gesammelt, sondern abgegeben.

Da jedoch der Aufbau und die Herstellung des stromabwärts gelegenen Lumen dem des stromaufwärts gelegenen Flüssigkeitssammlers 100 entspricht, wird hier vereinfacht von einem Flüssigkeitssammler 100 gesprochen. Dieser stromabwärts gelegene Abschnitt könnte ebenfalls als Flüssigkeitssammler dienen, wenn das gesamte Bauteil umgedreht würde. Eine spezielle Einbaurichtung und somit Strömungsrichtung des Lumens sind daher nicht notwendigerweise vorgegeben.

Die oben beschriebenen Ausführungsbeispiele und Varianten dienen nur der Veranschaulichung der Erfindung. Alle Beispiele, Varianten und einzelne Details können beliebig miteinander kombiniert werden, um bestimmte Ausführungsformen der Erfindung zu bilden, soweit sie in dem Schutzbereich der beigefügten Ansprüche fallen.

## Patentansprüche

1. Flugzeugkabinenabschnitt (10), umfassend:
ein Kabineneinrichtungsmodul (20), das eine Oberseite aufweist;
ein flüssigkeitsführendes Element (30), das an der Oberseite des Kabineneinrichtungsmoduls (20) angeordnet ist und eine Flüssigkeit auf und entlang der Oberseite des Kabineneinrichtungsmoduls (20) ableitet; und
einen Flüssigkeitssammler (100), der an einem unteren Ende des flüssigkeitsführenden Elements (30) angeordnet ist,
wobei
der Flüssigkeitssammler (100) im Wesentlichen aus flexiblem Material, das ein Lumen zum Ableiten der Flüssigkeit bildet, besteht, wobei das Lumen eine Eingangsöffnung (105) aufweist, die an dem unteren Ende des flüssigkeitsführenden Elements (30) angeordnet ist, sodass die Flüssigkeit von dem mindestens einen flüssigkeitsführenden Element (30) in das Lumen fließt, **dadurch gekennzeichnet, dass**
das flexible Material eine das Lumen begrenzende Hülle bildet, wobei ein flexibler Materialabschnitt, der eine Oberseite der Hülle bildet, mit einem flexiblen Materialabschnitt, der eine Unterseite der Hülle bildet, flächig in Kontakt steht und bei Durchströmen der Flüssigkeit durch die Hülle den Flächenkontakt verliert.

2. Flugzeugkabinenabschnitt (10) gemäß Anspruch 1, wobei der Flüssigkeitssammler (100) eine Ausgangsöffnung (106) aufweist, die so angeordnet ist, dass Flüssigkeit aus dem Lumen des Flüssigkeitssammlers (100) abfließt.

3. Flugzeugkabinenabschnitt (10) gemäß Anspruch 2, ferner umfassend:
einen Schlauch (150), der an der Ausgangsöffnung (106) des Flüssigkeitssammlers (100) angeschlossen ist.

4. Flugzeugkabinenabschnitt (10) gemäß einem der vorangegangenen Ansprüche, wobei der Flüssigkeitssammler (100) ein Spreizelement (120) aufweist, das die Eingangsöffnung (105) zumindest abschnittsweise bildet und die flexiblen Materialabschnitte des Flüssigkeitssammlers (100) voneinander beabstandet hält.

5. Flugzeugkabinenabschnitt (10) gemäß einem der vorangegangenen Ansprüche, ferner umfassend:
ein Halteelement (110), das den Flüssigkeitssammler (100) an dem unteren Ende des flüssigkeitsführenden Elements (30) hält,
wobei das Halteelement (110) vorzugsweise ein Klebestreifen ist, der an dem flüssigkeitsführenden Element (30) und/oder an der Oberseite des Kabineneinrichtungsmoduls (20) befestigt ist.

6. Flugzeugkabinenabschnitt (10) gemäß einem der vorangegangenen Ansprüche, ferner umfassend:
ein flüssigkeitsführendes Bauteil (7, 22, 27), das neben und/oder unterhalb des flüssigkeitsführenden Elements (30) angeordnet ist,
wobei der Flüssigkeitssammler (100) so angeordnet ist, dass Flüssigkeit aus dem Lumen des Flüssigkeitssammlers (100) in oder auf das flüssigkeitsführende Bauteil (7, 22, 27) fließt.

7. Flugzeugkabinenabschnitt (10) gemäß Anspruch 6, wobei das flüssigkeitsführende Bauteil (7, 22, 27) eine Seitenverkleidung (22) des Flugzeugkabinenabschnitts (10), eine Rückwand (27) des Kabineneinrichtungsmoduls (20) und/oder eine Isolierung (7) der Außenwand des Flugzeugkabinenabschnitts (10) ist.

8. Flugzeugkabinenabschnitt (10) gemäß einem der vorangegangenen Ansprüche, wobei das Kabineneinrichtungsmodul (20) ein Gepäckfach (21), eine Seitenverkleidung (22), ein Deckenverkleidungselement (23) und/oder ein Monument (24) ist.

9. Flugzeugkabinenabschnitt (10) gemäß einem der vorangegangenen Ansprüche, wobei der Flüssigkeitssammler (100) aus einem flexiblen Material, das aufeinandergelegt und entlang einer Längsseite (103) des Flüssigkeitssammlers (100) verschweißt ist, oder aus zwei flexiblen Materialabschnitten, die aufeinandergelegt und entlang zweier gegenüberliegender Längsseiten (103) des Flüssigkeitssammlers (100) verschweißt sind, besteht.

10. Flugzeug (1) mit mindestens einem Flugzeugkabinenabschnitt (10) gemäß einem der vorangegangenen Ansprüche.

## Claims

1. Aircraft cabin portion (10), comprising:
a cabin device module (20) which has a top side;
a liquid-conducting element (30) which is arranged on the top side of the cabin device module (20) and discharges a liquid on and along the top side of the cabin device module (20); and
a liquid collector (100) which is arranged at a lower end of the liquid-conducting element (30),
wherein
the liquid collector (100) consists substantially of flexible material which forms a lumen for discharging the liquid, the lumen having an inlet opening (105) which is arranged at the lower end of the liquid-conducting element (30), with the result that the liquid flows from the at least one liquid-conducting element (30) into the lumen, **characterized in that**
the flexible material forms a shell which delimits the lumen, wherein a flexible material portion forming a top side of the shell is in areal contact with a flexible material portion forming a bottom side of the shell and loses the areal contact when the liquid flows through the shell.

2. Aircraft cabin portion (10) according to Claim 1, the liquid collector (100) having an outlet opening (106) which is arranged in such a way that liquid flows out of the lumen of the liquid collector (100).

3. Aircraft cabin portion (10) according to Claim 2, comprising, furthermore: a hose (150) which is connected to the outlet opening (106) of the liquid collector (100).

4. Aircraft cabin portion (10) according to one of the preceding claims, the liquid collector (100) having a spreading element (120) which forms the inlet opening (105) at least in portions and holds the flexible material portions of the liquid collector (100) spaced apart from one another.

5. Aircraft cabin portion (10) according to one of the preceding claims, comprising, furthermore:
a holding element (110) which holds the liquid collector (100) at the lower end of the liquid-conducting element (30),
the holding element (110) preferably being an adhesive strip which is fastened to the liquid-conducting element (30) and/or to the top side of the cabin device module (20).

6. Aircraft cabin portion (10) according to one of the preceding claims, comprising, furthermore:
a liquid-conducting component (7, 22, 27) which is arranged next to and/or below the liquid-conducting element (30),
the liquid collector (100) being arranged in such a way that liquid flows out of the lumen of the liquid collector (100) into or onto the liquid-conducting component (7, 22, 27).

7. Aircraft cabin portion (10) according to Claim 6, the liquid-conducting component (7, 22, 27) being a side trim panel (22) of the aircraft cabin portion (10), a rear wall (27) of the cabin device module (20) and/or an insulation means (7) of the outer wall of the aircraft cabin portion (10).

8. Aircraft cabin portion (10) according to one of the preceding claims, the cabin device module (20) being a luggage compartment (21), a side trim panel (22), a ceiling trim element (23) and/or a monument (24).

9. Aircraft cabin portion (10) according to one of the preceding claims, the liquid collector (100) consisting of a flexible material which is folded over and welded along a longitudinal side (103) of the liquid collector (100), or consisting of two flexible material portions which are placed on one another and welded along two opposite longitudinal sides (103) of the liquid collector (100).

10. Aircraft (1) with at least one aircraft cabin portion (10) according to one of the preceding claims.

## Revendications

1. Partie (10) de cabine d'aéronef comprenant :
un module (20) d'aménagement de cabine comprenant une surface supérieure ;
un élément (30) de transport de liquide agencé sur la surface supérieure du module (20) d'aménagement de cabine et destiné à évacuer un liquide sur la surface supérieure du module (20) d'aménagement de cabine et le long de cette surface ; et
un collecteur de liquide (100) agencé à une extrémité inférieure de l'élément (30) de transport de liquide,
dans lequel
le collecteur de liquide (100) est constitué essentiellement d'un matériau flexible formant une lumière pour évacuer le liquide, la lumière comprenant une ouverture d'entrée (105) agencée à l'extrémité inférieure de l'élément (30) de transport de liquide de telle sorte que le liquide s'écoule depuis ledit au moins un élément (30) de transport de liquide dans la lumière, **caractérisée en ce que**
le matériau flexible forme une enveloppe délimitant la lumière, une partie de matériau flexible qui forme une face supérieure de l'enveloppe étant en contact plan avec une partie de matériau flexible formant une face inférieure de l'enveloppe et perdant le contact plan lors du passage du liquide à travers l'enveloppe.

2. Partie (10) de cabine d'aéronef selon la revendication 1, dans laquelle le collecteur de liquide (100) comprend une ouverture de sortie (106) agencée de manière à permettre au liquide de s'écouler hors de la lumière du collecteur de liquide (100).

3. Partie (10) de cabine d'aéronef selon la revendication 2, comprenant en outre :
un tuyau (150) raccordé à l'ouverture de sortie (106) du collecteur de liquide (100).

4. Partie (10) de cabine d'aéronef selon l'une des revendications précédentes, dans laquelle le collecteur de liquide (100) comprend un élément d'écartement (120) qui forme au moins partiellement l'ouverture d'entrée (105) et maintient espacées les unes des autres les parties en matériau flexible du collecteur de liquide (100).

5. Partie (10) de cabine d'aéronef selon l'une des revendications précédentes, comprenant en outre :
un élément de retenue (110) qui maintient le collecteur de liquide (100) à l'extrémité inférieure de l'élément (30) de transport de liquide,
l'élément de retenue (110) étant de préférence une bande adhésive fixée à l'élément (30) de transport de liquide et/ou à la face supérieure du module (20) d'aménagement de cabine.

6. Partie (10) de cabine d'aéronef selon l'une des revendications précédentes, comprenant en outre :
un composant (7, 22, 27) de transport de liquide qui est agencé à côté et/ou en dessous de l'élément (30) de transport de liquide,
le collecteur de liquide (100) étant agencé de telle sorte que le liquide s'écoule de la lumière du collecteur de liquide (100) dans le composant (7, 22, 27) de transport de liquide ou sur ce composant.

7. Partie (10) de cabine d'aéronef selon la revendication 6, dans laquelle l'élément (7, 22, 27) conducteur de liquide est un panneau latéral (22) de la partie (10) de cabine d'aéronef, une paroi arrière (27) du module (20) d'aménagement de cabine et/ou une isolation (7) de la paroi extérieure de la partie (10) de cabine d'aéronef.

8. Partie (10) de cabine d'aéronef selon l'une des revendications précédentes, dans laquelle le module (20) d'aménagement de cabine est un compartiment à bagages (21), un panneau latéral (22), un élément formant panneau de plafond (23) et/ou un montant (24).

9. Partie (10) de cabine d'aéronef selon l'une des revendications précédentes, dans laquelle le collecteur de liquide (100) est soudé à partir d'un matériau flexible qui est superposé à un côté longitudinal (103) du collecteur de liquide (100) et s'étend le long de ce côté, ou de deux sections de matériau flexible superposées et soudées le long de deux côtés longitudinaux opposés (103) du collecteur de liquide (100).

10. Aéronef (1) comprenant au moins une partie (10) de cabine d'aéronef selon l'une des revendications précédentes.
